# EUROPEAN PATENT APPLICATION

(11) **EP 4 349 667 A1**
(43) Date of publication of application: **10.04.2024**
(21) Application number: 22814980.3
(22) Date of filing: 10.05.2022
(51) Int. Cl.: B60R 22/34, B60R 22/405

(54) **SEAT BELT RETRACTOR**

(30) Priority: 31.05.2021 CN 202110597683
(71) Applicant: Yanfeng International Automotive Technology Co., Ltd., Shanghai 201306 (CN)
(72) Inventor: ZHAO, Wei, Shanghai 201315 (CN); LIN, Zhihan, Shanghai 201315 (CN); HUANG, Yongliang, Shanghai 201315 (CN)
(74) Representative: Dragotti & Associati S.R.L.
(86) International application number: PCT/CN2022/091848
(87) International publication number: WO 2022/252933

(57) **Abstract**

The present invention relates to a safety belt retractor, comprising a frame (1), a belt reel (3), which is rotatably supported in the frame (1) and is configured for winding a webbing (2), a force-limiting member (4), which fails when a predetermined load threshold is exceeded, and a pretensioner (10) having a drive wheel (6) coupled with the belt reel (3) via the force-limiting member (4), wherein the drive wheel is drivable to rotate the belt reel (3) in a winding direction of the webbing, so as to pretension the webbing. The drive wheel (6) is directly rotation-fixedly connected with the force-limiting member (4) at a first side facing the belt reel (3), wherein the drive wheel (6) is rotatably supported relative to the belt reel (3) except for a rotation-fixed connection. The safety belt retractor further comprises a lockable stop wheel (9), wherein the drive wheel (6) is directly rotation-fixedly connected with the stop wheel (9) at a second side facing away from the belt reel (3). The safety belt retractor has a compact structure and a stable force-limiting function.

## Description

### Technical Field

The present invention relates to the safety technical field, in particular relates to a safety belt retractor. The safety belt retractor may be configured for a transportation means, especially for a motor vehicle, such as a passenger car.

### Background of Invention

In a motor vehicle, a safety belt device is a critical part of an occupant restraint system, and it can provide a protection for an occupant, especially in a traffic accident, to avoid or minimize an injury of the occupant. With the development and progress of the motor vehicle technology, requirements on the performance of the safety belt devices are improving.

A safety belt device may have a safety belt retractor, which may be equipped with a vehicle sensing device and a locking mechanism, which are well-known in various forms in the prior art. The vehicle sensing device can sense a safety-relevant state of a motor vehicle, such as a vehicle acceleration and/or a vehicle inclination angle, and can activate the locking mechanism in a predetermined condition, so that a belt reel is locked in a webbing pull-out direction. The safety belt device may have a webbing sensing device, by which the belt reel is lockable in the webbing pulling direction when the webbing is pulled out from the safety belt retractor too quickly. As to the related prior art, for example the patent literatures CN109177915A and CN109159755A may be referred to.

Furthermore, a safety belt device with a pretensioning function is known, which comprises a pretensioner. The pretensioner can pretension a safety belt in an emergency of a vehicle, so as to better restrain a vehicle occupant. Pretensioners are also well-known in various forms in the prior art. For example, a pyrotechnic pretensioner may comprise a ball gearwheel and a gas generator, wherein steel balls are shot successively and engage the ball gearwheel when the gas generator is ignited, so that the ball gearwheel drives the belt reel to rotate in a winding direction of the webbing. In addition, a pretensioner is also known, which has a snake-shaped flexible strip and a gearwheel, wherein the flexible strip can be pushed out and engage with the gearwheel, so that the belt reel is driven to rotate in a winding direction of the webbing. Generally, a pretensioner is arranged at one side of a frame of a safety belt retractor, and a vehicle sensing device and a locking mechanism are arranged at the other side of the frame.

In some cases, it's possible that a pretensioner may provide an excessive pretensioning force when it's activated. After the pretensioner is activated, a vehicle occupant may be over-restrained, wherein an excessive peak value of a shoulder force of the webbing may cause an injury of the vehicle occupant. Therefore, a force limiter may be arranged in a safety belt device, which can limit a load-bearing capacity of the safety belt retractor.

In the research, the inventors of the present invention found, in the prior art known in practice, a pretensioning force exerted by a pretensioner on a belt reel should be overcome before a force limiter takes effect. In an emergency of a vehicle, a shoulder force is uncertain in a force-limiting process immediately after a pretensioning process. Safety belt retractors known in the prior art have a complicated structure, a large number of parts, and high requirements on sizes of parts in an assembly process.

### Summary of Invention

An object of the invention is to provide a safety belt retractor with a force-limiting function and a pretensioning function, which may have a compact structure, wherein the pretensioning function at least substantially doesn't affect the force-limiting function.

The object may be achieved by a safety belt retractor comprising:
- a belt reel, which is rotatably supported and is configured for winding a webbing,
- a force-limiting member, which is configured to fail when a predetermined load threshold is exceeded, and
- a pretensioner having a drive wheel coupled to the belt reel via the force-limiting member, wherein the drive wheel is drivable to rotate the belt reel coupled to the drive wheel in a winding direction of the webbing, so as to pretension the webbing,
wherein the drive wheel is directly rotation-fixedly connected to the force-limiting member at a first side facing the belt reel, and the drive wheel is rotatably supported relative to the belt reel except for a rotation-fixed coupling between the drive wheel and the belt reel via the force-limiting member.

In some embodiments, the safety belt retractor may further comprise a lockable stop member, in particular a stop wheel, with which the drive wheel is directly rotation-fixedly connected at a second side facing away from the belt reel.

In the context, the term "rotation-fixed connection" may mean, two connected parts can't or substantially can't rotate relative to each other. Due to an unintentional clearance (for example due to a manufacturing error), or due to an intentional clearance (for example due to an intentional design of a free play in several degrees), or due to the elasticity of components of the whole connection system, the two connected parts can rotate slightly relative to each other or can rotate relatively with a predetermined free play. For example, when two parts are welded or bonded together, or when they are interference-fitted or integrally made, they can rotate together, and hence they can be regarded as rotation-fixedly connected parts.

In some embodiments, the safety belt retractor may comprise a frame, in which the belt reel is rotatably supported.

The safety belt retractor may be generally used for a transportation means, such as for an aircraft, a ship, an amusement facility or a land transportation means, and especially for a motor vehicle, such as a passenger car.

In some embodiments, the force-limiting member may be a force-limiting rod.

In some embodiments, the force-limiting rod may be directly rotation-fixedly connected with the belt reel at its one end, and may be directly rotation-fixedly connected with the drive wheel at its other end.

In some embodiments, the force-limiting rod may be plastically deformed when a predetermined torsional load threshold is exceeded.

In some embodiments, the force-limiting rod may be sheared off when a predetermined torsional load threshold is exceeded. For example, the force-limiting rod may have a weak portion.

In some embodiments, a rotation-fixed connection between the force-limiting rod and the belt reel and/or the drive wheel may be damaged when a predetermined torsional load threshold is exceeded.

In some embodiments, the drive wheel may be a gearwheel or a friction wheel.

In some embodiments, the drive wheel may have a central hole, which may receive the force-limiting member and the stop member.

In some embodiments, the central hole may be configured as a stepped hole, wherein the central hole may have a first hole section with a larger diameter and a second hole section with a smaller diameter, and a step between the first hole section and the second hole section.

In some embodiments, the stop member may have a first shaft section with a larger diameter and a second shaft section with a smaller diameter, as well as a first shoulder at an end of the first shaft section facing away from the second shaft section and a second shoulder between the first shaft section and the second shaft section.

In some embodiments, the first shaft section of the stop member may be received in the first hole section, the second shaft section of the stop member may be received in the second hole section, the first shoulder may abut against the drive wheel, and the second shoulder may abut against the step of the central hole, and the second hole section may also receive the force-limiting member.

In some embodiments, the stop member may be positively connected with the drive wheel.

In some embodiments, the stop member may, in the first and the second shaft section, be directly rotation-fixedly connected to the drive wheel in the first and the second hole section of the central hole through segmented splines, and/or the force-limiting member may be directly rotation-fixedly connected to the drive wheel in the second hole section of the central hole through splines.

As an alternative or supplement to the positive connection, the stop member and the drive wheel may be connected in a force-fit and/or material-fit manner, and/or the force-limiting member and the drive wheel may be connected in a force-fit and/or material-fit manner.

In some embodiments, the stop member and the force-limiting member may abut against each other or may be adj acent to each other in the second hole section of the central hole.

In some embodiments, the drive wheel may have a hub at a first side facing the belt reel, and the belt reel may have a stepped hole, wherein the hub may be rotatably supported in a hole section of the stepped hole of the belt reel with a larger diameter.

In some embodiments, the safety belt retractor may have a vehicle sensing device and/or a webbing sensing device that cooperate with the stop member.

In some embodiments, the drive wheel may be configured as a ball gearwheel with teeth and ball sockets between the teeth, and the pretensioner may comprise a gas generator and a set of driving steel balls, which can be shot by the gas generated by the gas generator when the gas generator is ignited, and thus can engage and drive the ball gearwheel. Here, the term "driving steel ball" may be generally understood as a rolling body with an inertial mass, such as a sphere, an ellipsoid or a roller made of stainless steel, aluminum or another metal material or a composite material.

In some embodiments, the safety belt retractor may comprise a frame, such as a U-shaped frame, which is configured to be mounted in a vehicle, wherein a structural unit comprising the belt reel, the force-limiting member, the drive wheel and the stop member is rotatably supported in the frame.

In some embodiments, the safety belt retractor may comprise a locking plate having a gear ring that cooperates with the stop member, wherein a spring-loaded locking claw is movably guided in the stop member and can engage the gear ring against a spring force of a pre-loaded spring, wherein the locking plate may be fixedly mounted to the frame.

In some embodiments, at a side of the locking plate facing away from the belt reel in an axial direction, the safety belt retractor may comprise a vehicle sensing device that cooperates with the stop member.

In some embodiments, the safety belt retractor may comprise a support plate at a side of the belt reel opposite to the locking plate in an axial direction, wherein the support plate may be fixedly mounted to the frame, and may be configured to support a coil spring that pretensions the belt reel in a winding direction of the webbing, so that the webbing is received on the belt reel when the webbing isn't used by an occupant.

The above-mentioned technical features, the technical features to be mentioned below, and the technical features shown in the drawings may be arbitrarily combined with each other, as long as the combined technical features are not contradictory to each other. All technically feasible feature combinations are technical contents contained in the description.

### Brief Description of Drawings

An exemplary embodiment of a safety belt retractor according to the present invention is described with reference to the accompanying drawings, wherein,
Fig. 1 is a longitudinal sectional view of a safety belt retractor according to an embodiment of the present invention.
Fig. 2 is a partially enlarged longitudinal sectional view of components of the safety belt retractor of Fig. 1 in an assembled state.

### Detailed Description of Drawings

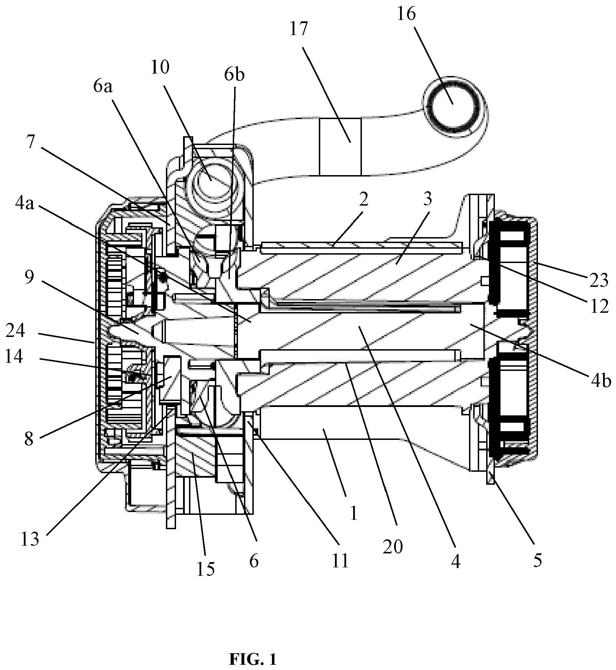

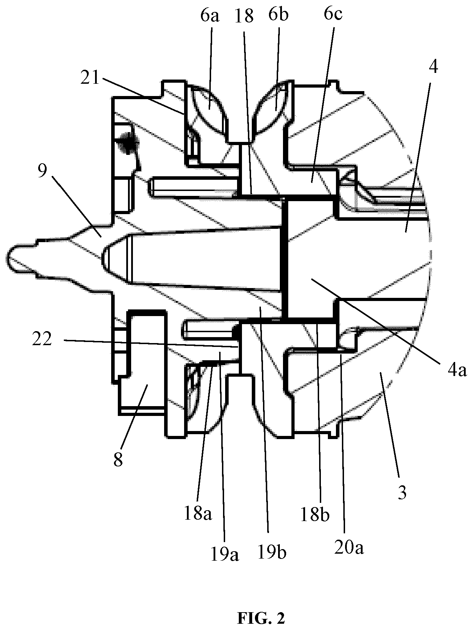

Fig. 1 is a longitudinal sectional view of a safety belt retractor according to an embodiment of the present invention, and Fig. 2 is a partially enlarged longitudinal sectional view of components of the safety belt retractor of Fig. 1 in an assembled state.

The safety belt retractor may comprise a frame 1, which configured to be mounted in a vehicle. For example, the safety belt retractor may be fixed to a vehicle body or a seat backrest by means of the frame 1. Typically, the frame 1 may be configured as a U-shaped frame, which comprises two side limbs and a bottom limb connecting the two side limbs, wherein each side limb may have an opening, in which a belt reel 3 of the safety belt retractor may be rotatably supported in the side limbs directly or indirectly.

The belt reel 3 is configured for winding a flexible webbing 2 of a safety belt device. At one axial end side (right end side in Fig. 1) of the belt reel 3, a support plate 5 may be provided, which may be fixedly mounted to the frame 1. The support plate 5 may be configured to support a coil spring, which pretensions the belt reel 3 in a winding direction of the webbing, so that the webbing 2 is received on the belt reel 3 when it isn't worn by an occupant. The coil spring may be provided with an end cover 23, which may be fixed to the support plate 5 and cover the coil spring. The support plate 5 has an opening 12, so that the belt reel 3 may extend through the support plate 5.

The safety belt retractor may comprise a force limiter, which may mainly comprise a force-limiting member 4. The force-limiting member 4 may be a force-limiting rod, which may be with its one end 4b, in particular directly, rotation-fixedly connected with the belt reel 3, and with its other end 4a directly rotation-fixedly connected with a drive wheel 6 which will be described in more detail below. For example, the force-limiting member 4 may be a torsion bar with splines at its two ends. The force-limiting member 4 may be configured to fail when a predetermined load threshold is exceeded. For example, the force-limiting member 4 may be plastically deformed when a predetermined torsional load threshold is exceeded, or alternatively it may be sheared off, or alternatively a rotation-fixed connection between the force-limiting member 4 and the belt reel 3 may be damaged when a predetermined torsional load threshold is exceeded.

The safety belt retractor may comprise a pretensioner 10 having the drive wheel 6 mentioned above, wherein the drive wheel is coupled with the belt reel 3 via the force-limiting member 4. In the shown embodiment, the drive wheel 6 is configured as a ball gearwheel with teeth and ball sockets between the teeth. The pretensioner 10 may comprise a gas generator 16 and a set of driving steel balls, which can be shot by the gas generated by the gas generator 16 when the gas generator 16 is ignited, and therefore can come into engagement with the drive wheel 6 under the guidance of the snake-shaped pipe 17 and drive the drive wheel 6, so that the belt reel 3, which is coupled with the drive wheel 6 via the force-limiting member 4, rotates in a winding direction of the webbing, so as to pretension the webbing 2. The pretensioner 10 may further comprise a ball storage 15, by which the balls and the flames and debris generated by the gas generator 16 can be prevented from being discharged into an inner room of a vehicle after the pretensioner 10 is activated.

The safety belt retractor may comprise a lockable stop wheel 9. The drive wheel 6 can be rotation-fixedly, especially directly, connected with the stop wheel 9.

The drive wheel 6 may have a hub 6c at a first side facing the belt reel 3, and the belt reel 3 may have a stepped hole 20, wherein the hub 6c is rotatably supported in a hole section 20a of the stepped hole 20 of the belt reel 3 with a larger diameter. Therefore, as viewed in an axial direction, the drive wheel 6 partially overlaps with the belt reel 3. Between the drive wheel 6 and the belt reel 3, except for a rotation-fixed coupling via the force-limiting member 4, the drive wheel 6 is rotatably supported relative to the belt reel 3 in the hole section 20a of the stepped hole 20 of the belt reel 3 by means of the hub 6c.

The drive wheel 6 may have a central hole 18 which may receive the force-limiting member 4 and the stop wheel 9. The drive wheel 6 may have a first half 6a and a second half 6b in an axial direction, wherein the central hole 18 in the first half 6a, that is to say, the first hole section 18a, has a larger diameter, and the central hole in the second half 6b, that is to say, the second hole section 18b, has a smaller diameter. A step, such as an annular step surface, is formed between the first half 6a and the second half 6b in the central hole 18.

The stop wheel 9 may have a first shaft section 19a with a larger diameter and a second shaft section 19b with a smaller diameter, as well as a first shoulder 21 at an end of the first shaft section 19a facing away from the second shaft section 19b and a second shoulder 22 between the first shaft section 19a and the second shaft section 19b. The first shaft section 19a of the stop wheel 9 may be received in the first hole section 18a. The second shaft section 19b of the stop wheel 9 may be received in the second hole section 18b. The first shoulder 21 may abut against the drive wheel 6. The second shoulder 22 may abut against the step of the central hole 18. The stop wheel 9 may, in the first shaft section 19a and the second shaft section 19b, be directly rotation-fixedly connected with the drive wheel 6 in the first hole section 18a and a second hole section 18b of the central hole 18 through segmented splines. The force-limiting member 4 extends into the second hole section 18b with its one end 4a. In the second hole section 18b of the central hole 18 of the drive wheel 6, the stop wheel 9 and the force-limiting member 4 may abut against each other or may be adjacent to each other with their end faces.

The safety belt retractor may comprise a locking plate 7. The locking plate 7 may be fixedly mounted to the frame 1. The locking plate 7 has an opening 11, so that the stop wheel 9 can pass through the locking plate 7. The locking plate 7 can hold the stop wheel 9 axially and can cooperate with the stop wheel 9. For example, the stop wheel 9 may have a sliding groove, in which a spring-loaded locking claw 8 is movably guided, and the locking plate 7 may have a gear ring 13. The locking claw 8 is kept in disengagement with the gear ring 13 of the locking plate 7 under a spring force of a pretensioning spring, and can come into engagement with the gear ring 13 against the spring force of the pretensioning spring for locking the stop wheel 9. A structural unit comprising the belt reel 3, the force-limiting member 4, the drive wheel 6 and the stop wheel 9 may be rotatably supported directly or indirectly with respect to the frame 1 through the openings of the frame 1 and/or the opening 12 of the support plate 5 and/or the opening 11 of the locking plate 7. For example, the belt reel 3 may be rotatably supported indirectly with respect to the frame 1 through the openings 11, 12.

At a side of the locking plate 7 facing away from the belt reel 3 in an axial direction, the safety belt retractor may comprise a vehicle sensing device 14 that cooperates with the stop wheel 9. The vehicle sensing device 14 can sense a safety-relevant state of a motor vehicle, such as a vehicle acceleration and a vehicle inclination angle, wherein the stop wheel 9 is lockable when the vehicle acceleration or the vehicle inclination angle exceeds a respective threshold, and thus the belt reel 3 is lockable in a webbing pull-out direction, so that the webbing 2 can't be further unwound or pulled out from the belt reel 3. The stop wheel 9 may also cooperate with a webbing sensing device, wherein the stop wheel 9 is lockable when the webbing 2 is pulled out from the safety belt retractor too quickly. The vehicle sensing device 14 may be provided with an end cover 24, which may be connected with the locking plate 7 and cover the vehicle sensing device 14.

In comparison with safety belt retractors known in the prior art, in the embodiments of the safety belt retractor according to the present invention as shown in the drawings, the pretensioner 10 doesn't directly act on the belt reel 3, wherein the ball gearwheel is coupled to the belt reel 3 only through the force-limiting rod. In an emergency of a vehicle, during a force-limiting process immediately after a pretensioning process, the pretensioner substantially has no influence on the force-limiting function. A substantially stable shoulder force can be generated on the webbing 2 when the force limiter is activated. In addition, the safety belt retractor has a compact structure, has few parts, and can be easily manufactured and assembled.

It should be noted, the terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprise" and "include" (and variants thereof), when used in this specification, specify the presence of stated operations, elements, and/or components, but do not preclude the presence or addition of one or more other operations, elements, components, and/or groups thereof. As used herein, the term "and/or" includes any and all combinations of one or more of the associated listed items. Like reference numbers signify like elements throughout the description of the figures.

The thicknesses of elements in the drawings may be exaggerated for the sake of clarity. Further, it will be understood that when an element is referred to as being "on", "coupled to" or "connected to" another element, the element may be formed directly on, coupled to or connected to the other element, or there may be one or more intervening elements therebetween. In contrast, terms such as "directly on", "directly coupled to" and "directly connected to", when used herein, indicate that no intervening elements are present. Other words used to describe the relationship between elements should be interpreted in a like fashion (i.e., "between" versus "directly between", "attached" versus "directly attached", "adjacent" versus "directly adjacent", etc.).

It will be understood that, although the terms "first", "second", etc. may be used herein to describe various elements, these elements should not be limited by these terms. These terms are only used to distinguish one element from another. Thus, a first element could be termed a second element without departing from the teachings of the inventive concept.

Finally, it is to be noted that, the above-described embodiments are merely for understanding the present invention but not constitute a limit on the protection scope of the present invention. For those skilled in the art, modifications may be made on the basis of the above-described embodiments, and these modifications do not depart from the protection scope of the present invention.

## Claims

1. A safety belt retractor comprising:
- a belt reel (3), which is rotatably supported and is configured for winding a webbing,
- a force-limiting member (4), which is configured to fail when a predetermined load threshold is exceeded, and
- a pretensioner (10), which comprises a drive wheel (6) coupled with the belt reel via the force-limiting member, wherein the drive wheel is drivable to rotate the belt reel, which is coupled with the drive wheel, in a winding direction of the webbing, so as to pretension the webbing,
**characterized in that**, the drive wheel (6) is directly rotation-fixedly connected with the force-limiting member (4) at a first side facing the belt reel, wherein the drive wheel is rotatably supported relative to the belt reel except for a rotation-fixed coupling between the drive wheel and the belt reel via the force-limiting member.

2. The safety belt retractor as recited in claim 1, **characterized in that**, the safety belt retractor further comprises a lockable stop member, wherein the drive wheel (6) is directly rotation-fixedly connected with the stop member at a second side facing away from the belt reel.

3. The safety belt retractor as recited in claim 2, **characterized in that**, the stop member is a stop wheel (9).

4. The safety belt retractor as recited in any one of claims 1 to 3, **characterized in that**, the force-limiting member (4) is a force-limiting rod, which is directly rotation-fixedly connected with the belt reel (3) at its one end (4b) and is directly rotation-fixedly connected with the drive wheel (6) at its other end (4a).

5. The safety belt retractor as recited in any one of claims 1 to 4, **characterized in that**, the drive wheel (6) has a central hole (18), which receives the force-limiting member and the stop member.

6. The safety belt retractor as recited in claim 5, **characterized in that**, the central hole (18) is configured as a stepped hole, wherein the central hole has a first hole section (18a) with a larger diameter and a second hole section (18b) with a smaller diameter as well as a step between the first hole section and the second hole section,
wherein the stop member has a first shaft section (19a) with a larger diameter and a second shaft section (19b) with a smaller diameter, as well as a first shoulder (21) at an end of the first shaft section facing away from the second shaft section and a second shoulder (22) between the first shaft section and the second shaft section,
wherein the first shaft section of the stop member is received in the first hole section, the second shaft section of the stop member is received in the second hole section, the first shoulder abuts against the drive wheel, and the second shoulder abuts against the step of the central hole, wherein the second hole section further receives the force-limiting member.

7. The safety belt retractor as recited in claim 6, **characterized in that**, the stop member, in the first and the second shaft section, is directly rotation-fixedly connected with the drive wheel (6) in the first and the second hole section of the central hole through segmented splines, and the force-limiting member (4) is directly rotation-fixedly connected with the drive wheel in the second hole section of the central hole through splines.

8. The safety belt retractor as recited in claim 6 or 7, **characterized in that**, the stop member and the force-limiting member (4) abut against each other or are adjacent to each other in the second hole section of the central hole.

9. The safety belt retractor as recited in any one of claims 1 to 8, **characterized in that**, the drive wheel (6) has a hub (6c) at a first side facing the belt reel, and the belt reel (3) has a stepped hole (20), wherein the hub is rotatably supported in a hole section (20a) of the stepped hole of the belt reel with a larger diameter.

10. The safety belt retractor as recited in any one of claims 1 to 9, **characterized in that**, the drive wheel (6) is configured as a ball gearwheel with teeth and ball sockets between the teeth, and the pretensioner (10) comprises a gas generator (16) and a set of driving steel balls, which can be shot by the gas generated by the gas generator when the gas generator is ignited, and therefore can come into engagement with the ball gearwheel and drive the ball gearwheel.

11. The safety belt retractor as recited in any one of claims 1 to 10, **characterized in that**, the safety belt retractor comprises a frame (1), which is configured to be mounted in a vehicle, wherein a structural unit comprising the belt reel, the force-limiting member, the drive wheel and the stop member is rotatably supported in the frame.

12. The safety belt retractor as recited in claim 11, **characterized in that**, the safety belt retractor comprises a locking plate (7), which cooperates with the stop member and has a gear ring (13), wherein a spring-loaded locking claw (8) is movably guided in the stop member and can come into engagement with the gear ring against a spring force of a pretensioning spring, wherein the locking plate is fixedly mounted to the frame.

13. The safety belt retractor as recited in any one of claims 1 to 12, **characterized in that**, the safety belt retractor comprises a vehicle sensing device (14) and/or a webbing sensing device, which cooperate with the stop member.
